# EUROPEAN PATENT SPECIFICATION

(11) **EP 4 423 168 B1**
(45) Date of publication and mention of the grant of the patent: **10.12.2025**
(21) Application number: 22797563.8
(22) Date of filing: 30.09.2022
(51) Int. Cl.: C08G 65/26, B01J 27/26, C08G 65/40, B01J 35/45, B01J 37/36, B01J 37/00, B01J 37/03

(54) **POLYETHER POLYMERIZATION PROCESS**
VERFAHREN ZUR POLYMERISATION VON POLYETHERN
PROCÉDÉ DE POLYMÉRISATION DE POLYÉTHER

(30) Priority: 25.10.2021 US 202163271650 P
(43) Date of publication of application: 04.09.2024
(73) Proprietor: Dow Global Technologies LLC, Midland, MI 48674 (US)
(72) Inventor: STEELMAN, David K., Freeport, Texas 77541 (US); NIKBIN, Nima, Lake Jackson, Texas 77566 (US); RAGHURAMAN, Arjun, Lake Jackson, Texas 77566 (US); ZIEBARTH, Robin P., Midland, Michigan 48667 (US); WESTON, John W., Lake Jackson, Texas 77566 (US); MASY, Jean-Paul, 4530 AA Terneuzen (NL)
(74) Representative: Beck Greener LLP
(86) International application number: PCT/US2022/045375
(87) International publication number: WO 2023/075987

(56) References cited:
- WO-A1-2011/160797
- WO-A1-2018/209075
- WO-A1-2020/131508
- US-B1- 6 906 110

## Description

This invention relates to processes for polymerizing alkylene oxides to form polyethers.

Poly(alkylene oxides) are produced globally in large quantities by polymerizing one or more alkylene oxides in the presence of a polymerization catalyst. They are important raw materials for producing polyurethanes and are used as surfactants and industrial solvents, among other uses. The predominant polymerization catalysts are alkali metal hydroxides or alkoxides and certain metal complexes that are commonly referred to as double metal cyanide (DMC) catalysts.

Double metal cyanide catalysts have certain advantages. They do not strongly catalyze a rearrangement of propylene oxide to form propenyl alcohol. Polyether polyols made using DMC catalysts therefore tend to have lower quantities of unwanted monofunctional polymers. In addition, DMC catalyst residues usually do not need to be removed from the product. Doing so avoids neutralization and catalyst removal steps that are needed when alkali metal catalysts are used.

DMC catalysts have certain disadvantages, however. They exhibit a latency period after being exposed to an alkylene oxide under polymerization conditions before they become "activated" and rapid polymerization begins. Another significant problem is that DMC catalysts perform sluggishly in the presence of high concentrations of hydroxyl groups. For this reason, DMC catalysts are disfavored when making low molecular weight products and in semi-batch processes that begin with low equivalent weight starters.

U.S. Patent No. 9,040,657 discloses a method of producing a polyether monol or polyol in the presence of the DMC catalyst and a magnesium, Group 3 - Group 15 metal or lanthanide series compound in which a magnesium, Group 3 - Group 15 metal or lanthanide series metal is bonded to at least one alkoxide, aryloxy, carboxylate, acyl, pyrophosphate, phosphate, thiophosphate, dithiophosphate, phosphate ester, thiophosphate ester, amide, siloxide, hydride, carbamate or hydrocarbon anion, and the magnesium, Group 3 - Group 15 or lanthanide series metal compound being devoid of halide anions. This technology is very effective in reducing the activation time and in improving the catalyst performance when exposed to high concentrations of hydroxyl groups. However, adding the second component of the catalyst system into the polymerization reaction requires additional equipment for storing and metering. Because of the small amounts that are needed, precise control over the addition of the second component can be difficult.

WO 2018/209069 and WO 2018/209075 disclose catalyst compositions made by precipitating a catalyst in the presence of certain metal compounds, which may include gallium, hafnium, indium or aluminum compounds. This avoids the problem of metering small amounts of the second component into the polymerization reaction while still producing a highly active and robust catalyst complex. Nonetheless, further improvements are desirable; a catalyst system that performs better under stringent polymerization conditions and/or in polymerizing ethylene oxide would be beneficial.

This invention is a method for producing a polyether, the method forming a reaction mixture comprising a hydroxyl-containing starter, at least one alkylene oxide, a catalyst complex, and an additive, and polymerizing the alkylene oxide onto the hydroxyl-containing starter to produce the polyether, wherein the catalyst complex is selected from the group consisting of catalyst complexes I and II, wherein
catalyst complex I is a catalyst complex produced in a method comprising:
   a) forming a starting solution comprising i) a solvent that includes at least one of water and a liquid aliphatic alcohol, the solvent having dissolved therein ii) a cyanometallate compound having an M² metal cyanometallate group and iii) a M¹ metal compound which reacts with the cyanometallate compound to form a water-insoluble M¹ metal cyanometallate, which starting solution further contains 0.01 to 10 moles, per mole of cyanometallate compound, of iii) at least one M⁵ metal or semi-metal compound different from the M¹ metal salt, the M⁵ metal or semi-metal compound being a compound of a M⁵ metal or semi-metal and an anion, the M⁵ metal or semi-metal being selected from one or more of magnesium, a Group 3 - Group 15 metal or semi-metal, or a lanthanide series metal which the M⁵ metal or semi-metal is bonded to at least one alkoxide, aryloxy, carboxylate, acyl, pyrophosphate, phosphate, thiophosphate, dithiophosphate, phosphate ester, thiophosphate ester, amide, oxide, siloxide, hydride, carbamate or hydrocarbon anion, and the M⁵ metal or semi-metal compound is devoid of halide anions; and
   b) reacting the cyanometallate compound and M¹ metal compound to form a water-insoluble catalyst complex that includes a M¹ metal cyanometallate;
and catalyst complex II corresponds to the formula:

   M¹_{b}[M²(CN)ᵣ(X¹)ₜ]_{c}[M³(X²)₆]_{d} • nM⁴ₓA¹_{y} • pM⁵_{w}A²_{z}

   wherein:
   M¹ and M⁴ each represent a metal ion independently selected from Zn²⁺, Fe²⁺, Co⁺²⁺, Ni²⁺, Mo⁴⁺, Mo⁶⁺, Al⁺³⁺, V⁴⁺, V⁵⁺, Sr²⁺, W⁴⁺, W⁶⁺, Mn²⁻, Sn²⁺, Sn⁴⁺, Pb²⁺, Cu²⁺, La³⁺, and Cr³⁺;
   M² and M³ each represent a metal ion independently selected from Fe³⁺, Fe²⁺, Co³⁺, Co²⁺, Cr²⁺, Cr³⁺, Mn²⁺, Mn³⁺, Ir³⁺, Ni²⁺, Rh³⁺, Ru²⁺, V⁴⁺, V⁵⁺, Ni²⁺, Pd²⁺, and Pt²⁺;
   M⁵ represents at least one magnesium, Group 3 - Group 15 metal, or lanthanide series metal or semi-metal ion;
   X¹ represents a group other than cyanide that coordinates with the M² ion;
   X² represents a group other than cyanide that coordinates with the M³ ion;
   A¹ represents an anion selected from halide, nitrate, sulfate, carbonate, cyanide, oxalate, thiocyanate, isocyanate, perchlorate, isothiocyanate, alkanesulfonate, arylenesulfonate, or trifluoromethanesulfonate ion;
   A² represents least one alkoxide, aryloxy, carboxylate, acyl, pyrophosphate, phosphate, thiophosphate, amide, oxide, siloxide, hydride, carbamate, or hydrocarbon anion;
   b, c and d are each numbers such that the M¹_{b}[M²(CN)ᵣ(X¹)ₜ]_{c}[M³(X²)₆]_{d} group is electrostatically neutral, provided that b and c each are greater than zero;
   x and y are integers such that the metal salt M⁴ₓA¹_{y} is electrostatically neutral;
   r is an integer from 4 to 6;
   t is an integer from 0 to 2;
   n is a number from 0 and 20;
   p is from 0.002 to 10; and
   w and z are integers such that the metal salt M⁵_{z}A²_{z} is electrostatically neutral, provided that w is from 1 to 4;
and the additive is selected from the group consisting of alkali metal, ammonium and quaternary ammonium salts of monocarboxylic acids having up to 24 carbon atoms; monobasic potassium phosphate, monobasic ammonium and quaternary ammonium phosphates, dibasic ammonium and quaternary ammonium phosphates and phosphoric acid.

The presence of the additive has been found to increase the activity of the double metal cyanide catalyst significantly. The additive enhances catalyst activation and polymerization rates under conditions of high hydroxyl concentrations and/or very low molecular weight starters. Very significantly, the presence of the additive improves catalyst performance in ethylene oxide polymerizations. With this invention, ethylene oxide can be polymerized onto even low molecular weight starters, and even under conditions of high hydroxyl concentrations, to produce poly(ethylene oxide) polymers of controlled molecular weight and low polydispersities.

Polyethers are prepared according to the invention in a process that comprises forming a polymerization mixture that includes the catalyst complex, an alcoholic starter compound, an alkylene oxide and the additive to form a polymerization mixture. A polyether is produced by polymerizing the alkylene oxide onto the hydroxyl-containing starter in the presence of the catalyst complex and the additive.

The main functions of the starter compound are to provide molecular weight control and to establish the number of hydroxyl groups that the polyether product will have. A hydroxyl-containing starter compound may contain 1 or more (preferably 2 or more) hydroxyl groups and as many as 12 or more hydroxyl groups. For example, starters for producing polyols for use in polyurethane applications usually have from 2 to 8 hydroxyl groups per molecule. In some embodiments, the starter compound will have from 2 to 4 or from 2 to 3 hydroxyl groups. In other embodiments, the starter compound will have from 4 to 8 or from 4 to 6 hydroxyl groups. The starter compound may have at least two hydroxyl groups that are in the 1,2- or 1,3-positions with respect to each other (taking the carbon atom to which one of the hydroxyl groups is bonded as the "1" position). Mixtures of starter compounds can be used.

The starter compound will have a hydroxyl equivalent weight less than that of the monol or polyol product. It may have a hydroxyl equivalent weight of from 30 to 500 g/equivalent or more as determined by measuring hydroxyl number according to ASTM D4274-21 and converting hydroxyl number in mg KOH/g to equivalent weight using the relation equivalent weight = 56,100 ÷ hydroxyl number. The equivalent weight may be up to 500, up to 250, up to 125, and/or up to 100 g/equivalent.

Exemplary starters include, but are not limited to, glycerin, ethylene glycol, diethylene glycol, triethylene glycol, propylene glycol, dipropylene glycol, tripropylene glycol, 1,4-butane diol, 1,6-hexane diol, 1,8-octane diol, cyclohexane dimethanol, glycerin, trimethylolpropane, trimethylolethane, pentaerythritol, sorbitol, sucrose, phenol and polyphenolic starters such as bisphenol A or 1,1,1-tris(hydroxyphenyl)ethane, and alkoxylates (such as ethoxylates and/or propoxylates) of any of these that have a hydroxyl equivalent weight less than that of the product of the polymerization. The starter compound can also be water.

Certain starters may provide specific advantages. Triethylene glycol has been found to be an especially good starter for use in batch and semi-batch processes for producing polyether diols. Tripropylene glycol and dipropylene glycol also have been found to be especially good starters for use in conjunction with the catalyst complex of the invention.

The alkylene oxide may be, e.g., ethylene oxide, 1,2-propylene oxide, 2,3-propylene oxide, 1,2-butane oxide, 2-methyl-1,2-butaneoxide, 2,3-butane oxide, tetrahydrofuran, epichlorohydrin, hexane oxide, styrene oxide, divinylbenzene dioxide, a glycidyl ether such as bisphenol A diglycidyl ether, allyl glycidyl ether, another polymerizable oxirane, or a mixture of any two or more of these. In some specific embodiments the alkylene oxide is 1,2-propylene oxide, or a mixture of at least 40% (preferably at least 80%) by weight 1,2-propylene oxide and up to 60% by weight (preferably up to 20%) ethylene oxide. An important advantage of this invention is the catalyst can be activated in the presence of ethylene oxide as the sole or predominant alkylene oxide, and that ethylene oxide can be polymerized facilely even onto low molecular weight starters. Thus, in some embodiments, the alkylene oxide is ethylene oxide or a mixture of at least 60% or at least 80% by weight ethylene oxide, and correspondingly up to 40% or up to 20% 1,2-propylene oxide.

The components that make up the reaction mixture may be combined in any order.

The reaction mixture in some embodiments contains 1 to 25 wt. % hydroxyl groups, based on the total weight of the reaction mixture. The reaction mixture may contain, for example, 4.5 to 20 wt. %, 4.5 to 15 wt.%, 4.5 to 12 wt. % or 4.5 to 10 wt. % hydroxyl groups for at least a portion of the polymerization reaction.

The reaction mixture in some embodiments contains up to 10 wt. % ethylene oxide. The reaction mixture may contain, for example, up to 8 wt. %, up to 6 wt. % or up to 5 wt.% ethylene oxide at a point in the polymerization in which the ethylene oxide content (if any) is at its highest. In some embodiments, the reaction mixture contains, for at least a portion of the polymerization reaction, at least 2 wt. % or at least 3 wt. % of ethylene oxide.

The polymerization typically is performed at an elevated temperature. The polymerization mixture temperature may be, for example, 80 to 220°C (*e.g.,* from 120 to 190°C).

The polymerization reaction usually is performed at superatmospheric pressure, but can be performed at atmospheric pressure or even sub-atmospheric pressures. A preferred pressure is 0 to 10 atmospheres (0 to 1013 kPa), especially 0 to 6 atmospheres (0 to 608 kPa), gauge pressure.

The polymerization preferably is performed under vacuum or under an inert atmosphere such as a nitrogen, helium or argon atmosphere.

Enough of the water insoluble polymerization catalyst complex may be used to provide a reasonable polymerization rate, but it is generally desirable to use as little of the catalyst complex as possible consistent with reasonable polymerization rates, as this both reduces the cost for the catalyst and, if the catalyst levels are low enough, can eliminate the need to remove catalyst residues from the product. Using lower amounts of catalysts also reduces the residual metal content of the product. The amount of catalyst complex may be from 1 to 5000 ppm based on the weight of the product. The amount of catalyst complex may be at least 2 ppm, at least 5 ppm, at least 10 ppm, at least 25 ppm, or up to 500 ppm or up to 200 ppm or up to 100 ppm, based on the weight of the product. When the catalyst complex contains a hexacyanocobaltate compound, the amount of catalyst complex may be selected to provide 0.25 to 20, 0.5 to 10, 0.5 to 1 or 0.5 to 2.5 parts by weight cobalt per million parts by weight of the product.

The polymerization reaction may be performed in any type of vessel that is suitable for the pressures and temperatures encountered. In a continuous or semi-batch process, alkylene oxide, additional starter compound and preferably the water insoluble polymerization catalyst complex, promoter (if used) and additive are introduced as the polymerization proceeds. Accordingly, the vessel should have one or more inlets through which those components can be introduced during the reaction. In a continuous process, the reactor vessel should contain at least one outlet through which a portion of the partially polymerized reaction mixture can be withdrawn. In a semi-batch operation, alkylene oxide (and optionally additional starter and catalyst complex) is added during the reaction, but product usually is not removed until the polymerization is completed. A tubular reactor that has multiple points for injecting the starting materials, a loop reactor, and a continuous stirred tank reactor (CTSR) are all suitable types of vessels for continuous or semi-batch operations. The reactor should be equipped with a means of providing and/or removing heat, so the temperature of the reaction mixture can be maintained within the required range. Suitable means include various types of jacketing for thermal fluids, various types of internal or external heaters, and the like. A cook-down step performed on continuously withdrawn product is conveniently conducted in a reactor that prevents significant back-mixing from occurring. Plug flow operation in a pipe or tubular reactor is a preferred manner of performing such a cook-down step.

The product obtained in any of the foregoing processes may contain up to 0.5% by weight, based on the total weight, of unreacted alkylene oxide; small quantities of the starter compound and low molecular weight alkoxylates thereof; and small quantities of other organic impurities and water. Volatile impurities should be flashed or stripped from the resultant polyether. The product typically contains catalyst residues and may contain residues of the additive. It is typical to leave these residues in the product, but these can be removed if desired. Moisture and volatiles can be removed by stripping the polyol.

The polymerization reaction can be characterized by the "build ratio", which is defined as the ratio of the number average molecular weight of the product to that of the starter compound. This build ratio may be as high as 160, but is more commonly in the range of from 2.5 to about 65 and still more commonly in the range of from 2.5 to about 50, from 2.5 to 35, from 2.5 to 11 or from 7 to 11.

The invention is particularly useful in polymerization processes characterized by any one or more of the following: i) the use of a starter having an equivalent weight of up to 125, especially up to 100 or up to 75 g/equivalent; ii) a hydroxyl content of 4.25 to 20 wt. %, especially 4.25 to 15 wt. %, 4.25 to 12 wt. % or 4.25 to 10 wt. %, based on the total weight of the reaction mixture, during at least a portion of the polymerization process, iii) a concentration of catalyst complex sufficient to provide at most 5 ppm of cobalt, especially 0.5 to 2 ppm cobalt, based on the weight of the product, iv) the alkylene oxide is ethylene oxide or a mixture of alkylene oxides that contains at least 60% or at least 80% by weight ethylene oxide (the balance preferably being 1,2-propylene oxide) and (v) an ethylene oxide concentration of 2 to 10 wt. %, 2 to 8 wt. %, 2 to 6 wt. % or 2 to 5 wt. % at a point in the polymerization in which the ethylene oxide content (if any) is at its highest. Each of these represents a severe condition in which conventional zinc hexacyanometallate catalysts perform poorly.

In some embodiments, the polymerization step is performed in the presence of no more than 0.01 mole of a carbonate precursor per mole of alkylene oxide that is polymerized. A "carbonate" precursor is a compound that gives rise to carbonate (-O-C(O)-O-) linkages when polymerized with an alkylene oxide. Examples of carbonate precursors include carbon dioxide, linear carbonates, cyclic carbonates, phosgene and the like.

The catalyst complex in some embodiments is one made in a precipitation process in which a solution containing the starting materials is prepared, certain of the starting materials react and the catalyst complex precipitates from the starting solution. In general, methods for producing a polymerization catalyst as described in WO 2018/209069 and WO 2018/209075 are suitable.

The solvent includes at least one of water and a liquid aliphatic alcohol. The solvent is one in which the starting cyanometallate compound and M¹ metal compound are soluble. The solvent may or may not be a solvent for the M⁵ metal or semi-metal compound.

The solvent may be, for example, water, n-propanol, iso-propanol, n-butanol, sec-butanol, t-butanol, other alkylene monoalcohol having up to, for example, 12 carbon atoms, ethylene glycol, diethylene glycol, triethylene glycol, propylene glycol, dipropylene glycol, tripropylene glycol, or other polyether having one or more hydroxyl groups and a number average molecular weight of up to, for example, 8000 g/mol as measured by gel permeation chromatography against polystyrene standards. Aliphatic monoalcohols having 3 to 6 carbon atoms, especially t-butanol, are preferred among these. Especially preferred is a mixture of water and a liquid aliphatic alcohol that is soluble in water at the relative proportions present in the mixture (especially an aliphatic monoalcohol having 3 to 6 carbon atoms and most preferably t-butanol), in a volume ratio of 25:75 to 90:10.

The starting solution is conveniently formed by forming separate solutions of the starting cyanometallate compound and the M¹ metal compound and combining them. The M⁵ metal or semi-metal compound is conveniently added to one or the other of these separate solutions, preferably the M¹ metal or semi-metal compound solution. The combining of the starting solution should be accompanied by mixing. It is generally preferred to mix the cyanometallate compound solution into the solution of the M¹ metal compound, preferably by gradually adding the cyanometallate compound solution so the M¹ metal compound is always present in excess.

It is preferred to provide an excess of the M¹ metal compound over the cyanometallate compound. In some embodiments, the mole ratio of M¹ metal compound to cyanometallate compound is at least 2:1, preferably at least 3:1 or at least 5:1. This ratio may be, for example, up to 20:1 or up to 15:1.

The starting solution contains, prior to reaction, 0.01 to 10 moles of the M⁵ metal or semi-metal compound per mole of cyanometallate compound. Smaller amounts do not lead to any improvement in the performance of the catalyst complex. Larger amounts not only fail to improve the catalyst performance but can actually tend to diminish it.

The cyanometallate compound and M¹ metal compound react to form a catalyst complex that includes a water-insoluble M¹ metal cyanometallate. This reaction proceeds spontaneously at temperatures around room temperature (23°C) or slightly elevated temperatures. Therefore, no special reaction conditions are needed. The temperature may be, for example, from 0 to 60°C. A preferred temperature is 20 to 50°C or 25 to 45°C. It is preferred to continue agitation until precipitation takes place, which is generally indicated by a change of appearance in the solution. The reaction pressure is not especially critical so long as the solvent does not boil off. An absolute pressure of 10 to 10,000 kPa is suitable, with an absolute pressure of 50 to 250 kPa being entirely suitable. The reaction time may be from 30 minutes to 24 hours or more.

In some cases, the M⁵ metal or semi-metal compound may react during the catalyst preparation step. For example, certain M⁵ metal or semi-metal compounds may react with water during the catalyst preparation to form the corresponding M⁵ metal oxide. The M⁵ metal or semi-metal compound or reaction product thereof (especially an M⁵ metal or semi-metal oxide) in some embodiments forms, together with a reaction product of the M¹ metal compound and the cyanometallate compound, hybrid particles having both an M¹_{b}[_{M}²(CN)ᵣ(X¹)ₜ]_{c} phase and an M⁵ metal or semi-metal oxide phase.

It is preferred to treat the precipitated catalyst with a complexing agent. This is conveniently done by washing the precipitated catalyst one or more times with a complexing agent or solution of the complexing agent in water. The complexing agent component may include at least one of an alcohol as described before with regard to the starting solution, a polyether, a polyester, a polycarbonate, a glycidyl ether, a glycoside, a polyhydric alcohol carboxylate, a polyalkylene glycol sorbitan ester, a bile acid or salt, a carboxylic acid ester or amide thereof, cyclodextrin, an organic phosphate, a phosphite, a phosphonate, a phosphonite, a phosphinate, a phosphinite, an ionic surface- or interface-active compound, and/or an α,β-unsaturated carboxylic acid ester. In exemplary embodiments, the organic complex agent is one or more of n-propanol, iso-propanol, n-butanol, sec-butanol, t-butanol, other alkylene monoalcohol having up to, for example, 12 carbon atoms, ethylene glycol, diethylene glycol, triethylene glycol, propylene glycol, dipropylene glycol, tripropylene glycol, or other polyether having one or more hydroxyl groups and a number average molecular weight of up to, for example, 8000 g/mol as measured by gel permeation chromatography against polystyrene standards.

The catalyst complex so made is conveniently recovered from the starting solution or any wash liquid, dried and, if desired, ground or milled to reduce the catalyst complex to a powder having a volume average particle size of, for example, 100 µm or smaller. Drying can be performed by heating and/or applying vacuum.

The M¹ metal compound preferably is water-soluble. It is typically a salt of an M¹ metal and one or more anions. Such a salt may have the formula M¹ₓA¹_{y}, wherein x, A¹ and y are as described before. Suitable anions A¹ include, but are not limited to, halides such as chloride, bromide and iodide, nitrate, sulfate, carbonate, cyanide, oxalate, thiocyanate, isocyanate, perchlorate, isothiocyanate, an alkanesulfonate such as methane sulfonate, an arylenesulfonate such as p-toluenesulfonate and trifluoromethanesulfonate (triflate). In exemplary embodiments, the anion A¹ is not any of alkoxide, aryloxy, carboxylate, acyl, pyrophosphate, phosphate, thiophosphate, dithiophosphate, phosphate ester, thiophosphate ester, amide, oxide, siloxide, hydride, carbamate or hydrocarbon anion. The M¹ metal is one or more of Zn²⁺, Fe²⁺, Co⁺²⁺, Ni²⁺, Mo⁴⁺, Mo⁶⁺, Al⁺³⁺, V⁴⁺, V⁵⁺, Sr²⁺, W⁴⁺, W⁶⁺, Mn²⁺, Sn²⁺, Sn⁴⁺, Pb²⁺, Cu²⁺, La³⁺ and Cr³⁺. Zn²⁺ is the preferred M¹ metal. ZnCl₂ is a preferred M¹ metal compound.

The cyanometallate compound includes an M²(CN)ᵣ(X¹)ₜ anion, where r, X¹ and t are as described before. r is preferably 6 and t is preferably zero. The M² metal is one or more of Fe³⁺, Fe²⁺, Co³⁺, Co²⁺, Cr²⁺, Cr³⁺, Mn²⁺, Mn³⁺, Ir³⁺, Ni²⁺, Rh³⁺, Ru²⁺, V⁴⁺, V⁵⁺, Ni²⁺, Pd²⁺, and Pt²⁺. The M² metal preferably is Fe³⁺ or Co³⁺, with Co³⁺ being especially preferred. The cyanometallate compound preferably is an alkali metal or ammonium salt, although the corresponding cyanometallitic acid can be used. Potassium hexacyanocobaltate is a particularly preferred cyanometallate compound.

The M⁵ metal or semi-metal compound is a compound of magnesium or a metal or semi-metal M⁵ that falls within any of Groups 3 through 15, inclusive, of the 2010 IUPAC periodic table of the elements, and one or more anions. The metal may be, e.g., scandium, yttrium, lanthanum, zirconium, hafnium, vanadium, niobium, tantalum, chromium, molybdenum, tungsten, manganese, rhenium, iron, ruthenium, osmium, cobalt, rhodium, iridium, nickel, titanium, silicon, palladium, platinum, copper, silver, gold, zinc, cadmium, mercury, aluminum, gallium, indium, tellurium, tin, lead, bismuth, and the lanthanide series metals including those having atomic numbers from 58 (cerium) to 71 (lutetium), inclusive.

Preferred M⁵ metals and semi-metals include yttrium, zirconium, nobium, silicon, titanium, tungsten, cobalt, scandium, vanadium, molybdenum, nickel, zinc and tin. More preferred are hafnium, aluminum, manganese, gallium and indium.

Mixtures of compounds of two or more different M⁵ metals or semi-metals may be present, as described, for example, in WO 2020/131508. In such mixtures, it is preferred that at least one of M⁵ metals or semi-metals is gallium, indium, hafnium or titanium (especially gallium or hafnium), and at least one other M⁵ metal or semi-metal is aluminum, silicon or titanium (especially aluminum).

The anion of the M⁵ metal or semi-metal compound may be for example, one or more of alkoxide, aryloxy, carboxylate, acyl, pyrophosphate, phosphate, thiophosphate, dithiophosphate, phosphate ester, thiophosphate ester, amide, oxide, siloxide, hydride, carbamate, and/or hydrocarbon anion. Exemplary embodiments include the oxide, hydrocarbyl, oxide and/or the alkoxide ions. The anion is not a halide anion or a cyanide anion.

The M⁵ metal or semi-metal compound may be insoluble in the solvent or, if soluble, may react during the preparation of the catalyst complex to form an insoluble reaction product that becomes part of the catalyst complex. The M⁵ metal or semi-metal also preferably does not reduce a cyanometallate group or prevent the M¹ metal compound and cyanometallate compound from reacting to form an M¹ metal cyanometallate.

By "alkoxide" ion it is meant a species having the form ⁻O-R, where R is an alkyl group or substituted alkyl group, and which is the conjugate base, after removal of a hydroxyl hydrogen, of an alcohol compound having the form HO-R. These alcohols may have pKa values in the range of 13 to 25 or greater. The alkoxide ion in some embodiments may contain from 1 to 20 (e.g., from 1 to 6 and/or from 2 to 6) carbon atoms. The alkyl group or substituted alkyl group may be linear, branched, and/or cyclic. Examples of suitable substituents include, e.g., additional hydroxyl groups (which may be in the alkoxide form), ether groups, carbonyl groups, ester groups, urethane groups, carbonate groups, silyl groups, aromatic groups such as phenyl and alkyl-substituted phenyl, and halogens. Examples of such alkoxide ions include methoxide, ethoxide, isopropoxide, n-propoxide, n-butoxide, sec-butoxide, t-butoxide, and benzyloxy. The R group may contain one or more hydroxyl groups and/or may contain one or more ether linkages. An alkoxide ion may correspond to the residue (after removal of one or more hydroxyl hydrogens) of an starter compound that is present in the polymerization, such as those starter compounds described below. The alkoxide ion may be an alkoxide formed by removing one or more hydroxyl hydrogens from a polyether monol or polyether polyol; such an alkoxide in some embodiments corresponds to a residue, after removal of one or more hydroxyl hydrogen atoms, of the polyether monol or polyether polyol product that is obtained from the alkoxylation reaction, or of a polyether having a molecular weight intermediate to that of the starter compound and the product of the alkoxylation reaction.

By "aryloxy" anion it is meant a species having the form ⁻O-Ar, where Ar is an aromatic group or substituted group, and which corresponds, after removal of a hydroxyl hydrogen, to a phenolic compound having the form HO-Ar. These phenolic compounds may have a pKa of, e.g., from about 9 to about 12. Examples of such aryloxy anions include phenoxide and ring-substituted phenoxides, wherein the ring-substituents include, e.g., alkyl, CF₃, cyano, COCH₃, halogen, hydroxyl, and alkoxyl. The ring-substituent(s), if present, may be in one or more of the ortho-, para- and/or meta-positions relative to the phenolic group. The phenoxide anions also include the conjugate bases of polyphenolic compounds such as bisphenol A, bisphenol F and various other bisphenols, 1,1,1-tris(hydroxyphenyl)ethane, and fused ring aromatics such as 1-naphthol.

By "carboxylate" anion it is meant a carboxylate that contains from 1 to 24 (e.g., from 2 to 18 and/or from 2 to 12) carbon atoms. The carboxylate may be aliphatic or aromatic. An aliphatic carboxylic acid may contain substituent groups. Examples of such include hydroxyl groups (which may be in the alkoxide form), ether groups, carbonyl groups, ester groups, urethane groups, carbonate groups, silyl groups, aromatic groups such as phenyl and alkyl-substituted phenyl, and halogens. Examples of aliphatic carboxylate anions include formate, acetate, propionate, butyrate, 2-ethylhexanoate, n-octoate, decanoate, laurate and other alkanoates and halogen-substituted alkanoates such as 2,2,2-trifluoroacetate, 2-fluoroacetate, 2,2-difluoroacetate, 2-chloroacetate, and 2,2,2-trichloroacetate. Examples of aromatic carboxylates include benzoate, alkyl-substituted benzoate, halo-substituted benzoate, 4-cyanobenzoate, 4-trifluoromethylbenzoate, salicylate, 3,5-di-t-butylsalicylate, and subsalicylate. In some embodiments, such a carboxylate ion may be the conjugate base of a carboxylic acid having a pKa from 1 to 6 (e.g., from 3 to 5).

By "acyl" anion it is meant a conjugate base of a compound containing a carbonyl group including, e.g., an aldehyde, ketone, acetylacetonate, carbonate, ester or similar compound that has an enol form. Examples of these are β-diketo compounds, such as acetoacetonate and butylacetoacetonate.

By "phosphate" anion it is meant a phosphate anion that have the formula -O-P(O)(OR₁)₂, wherein R₁ is alkyl, substituted alkyl, phenyl, or substituted phenyl. By "thiophosphate" anion it is meant thiophosphate anions have the corresponding structure in which one or more of the oxygens are replaced with sulfur. The phosphate and thiophosphates may be ester anions, such as phosphate ester and thiophosphate ester.

By "pyrophosphate" anion it is meant the P₂O₇⁴⁻ anion.

By "amide" anion it is meant an ion in which a nitrogen atom bears a negative charge. The amide ion generally takes the form -N(R₂)₂, wherein the R₂ groups are independently hydrogen, alkyl, aryl, trialkylsilyl, or triarylsilyl. The alkyl groups may be linear, branched, or cyclic. Any of these groups may contain substituents such as ether or hydroxyl. The two R₂ groups may together form a ring structure, which ring structure may be unsaturated and/or contain one or more heteroatoms (in addition to the amide nitrogen) in the ring.

By "oxide" anion is meant the anion of atomic oxygen, i.e., O²⁻.

By "siloxide" anion it is meant silanoates having the formula (R₃)₃SiO-, wherein R₃ groups are independently hydrogen or alkyl group.

By "hydride" anion it is meant the anion of hydrogen, i.e., H-

By "carbamate" anion it is meant the anion -OOCNH₂.

By "hydrocarbon" anion it is meant hydrocarbyl anions that include aliphatic, cycloaliphatic and/or aromatic anions wherein the negative charge resides on a carbon atom. The hydrocarbyl anions are conjugate bases of hydrocarbons that typically have pKa values in excess of 30. The hydrocarbyl anions may also contain inert substituents. Of the aromatic hydrocarbyl anions, phenyl groups and substituted phenyl groups may be used. Aliphatic hydrocarbyl anions may be alkyl groups, e.g., which contain from 1 to 12 (e.g., from 2 to 8) carbon atoms. For example, methyl, ethyl, n-propyl, isopropyl, n-butyl, sec-butyl, isobutyl, cyclopentadienyl and t-butyl anions are all useful.

Examples of M⁵ metal or semi-metal compounds include but are not limited to:
a) magnesium alkyls such as diethyl magnesium, dibutyl magnesium, butylethyl magnesium, dibenzyl magnesium and the like; magnesium alkoxides such as magnesium methoxide, magnesium ethoxide, magnesium isopropoxide, magnesium t-butoxide, magnesium sec-butoxide and the like; magnesium aryloxides such as magnesium phenoxide, and magnesium phenoxides in which one or more of the phenoxide groups is ring-substituted with alkyl, CF₃, cyano, COCH₃, halogen, hydroxyl, alkoxyl and the like; magnesium carboxylates such as magnesium formate, magnesium acetate, magnesium propionate, magnesium 2-ethylhexanoate, magnesium benzoate, magnesium benzoates in which one or more of the benzoate groups is ring-substituted with alkyl, CF₃, cyano, COCH₃, halogen, hydroxyl, alkoxyl and the like, magnesium salicylate, magnesium 3,5-di-t-butyl salicylate; magnesium amides such as magnesium dimethylamide, magnesium diethylamide, magnesium diphenylamide, magnesium bis(trimethylsilyl)amide and the like; magnesium oxide, magnesium acetylacetonate and magnesium t-butylacetylacetonate;
b) scandium alkoxides such as scandium methoxide, scandium ethoxide, scandium isopropoxide, scandium t-butoxide, scandium sec-butoxide and the like; scandium oxide; scandium aryloxides such as scandium phenoxide and scandium phenoxides in which one or more of the phenoxide groups is ring-substituted with alkyl, CF₃, cyano, COCH₃, halogen, hydroxyl, alkoxyl and the like; scandium carboxylates such as scandium formate, scandium acetate, scandium propionate, scandium 2-ethylhexanoate, scandium benzoate, scandium benzoates in which one or more of the benzoate groups is ring-substituted with alkyl, CF₃, cyano, COCH₃, halogen, hydroxyl, alkoxyl and the like; scandium salicylate; scandium acetylacetonate and scandium t-butylacetylacetonate;
c) yttrium alkoxides such as yttrium methoxide, yttrium ethoxide, yttrium isopropoxide, yttrium t-butoxide, yttrium sec-butoxide and the like; yttrium oxide; yttrium aryloxides such as yttrium phenoxide, and yttrium phenoxides in which one or more of the phenoxide groups is ring-substituted with alkyl, CF₃, cyano, COCH₃, halogen, hydroxyl, alkoxyl and the like; yttrium carboxylates such as yttrium formate, yttrium acetate, yttrium propionate, yttrium 2-ethylhexanoate, yttrium benzoate, yttrium benzoates in which one or more of the benzoate groups is ring-substituted with alkyl, CF₃, cyano, COCH₃, halogen, hydroxyl, alkoxyl and the like, yttrium salicylate, yttrium 3,5-di-t-butyl salicylate; yttrium amides such as yttrium dimethylamide, yttrium diethylamide, yttrium diphenylamide, yttrium bis(trimethylsilyl)amide and the like; yttrium acetylacetonate and yttrium t-butylacetylacetonate;
d) hafnium alkyls such as such as tetraethyl hafnium, tetrabutyl hafnium, tetrabenzyl hafnium and the like; hafnium oxide; hafnium alkoxides such as hafnium tetramethoxide, hafnium tetraethoxide, hafnium tetraisopropoxide, hafnium tetra-t-butoxide, hafnium tetra-sec-butoxide and the like; hafnium aryloxides such as hafnium phenoxide and hafnium phenoxides in which one or more of the phenoxide groups is ring-substituted with alkyl, CF₃, cyano, COCH₃, halogen, hydroxyl, alkoxyl and the like; hafnium carboxylates such as hafnium formate, hafnium acetate, hafnium propionate, hafnium 2-ethylhexanoate, hafnium benzoate, hafnium benzoates in which one or more of the benzoate groups is ring-substituted with alkyl, CF₃, cyano, COCH₃, halogen, hydroxyl, alkoxyl and the like, hafnium salicylate, hafnium 3,5-di-t-butyl salicylate; hafnium amides such as hafnium tetra(dimethylamide), hafnium tetra(diethylamide), hafnium tetra(diphenylamide), hafnium tetra((bistrimethylsilyl)amide); hafnium acetylacetonate and hafnium t-butylacetylacetonate;
e) zirconium alkyls such as such as tetraethyl zirconium, tetrabutyl zirconium, tetrabenzyl zirconium and the like; zirconium oxide; zirconium alkoxides such as zirconium tetramethoxide, zirconium tetraethoxide, zirconium tetraisopropoxide, zirconium tetra-t-butoxide, zirconium tetra-sec-butoxide and the like; zirconium aryloxides such as zirconium phenoxide and zirconium phenoxides in which one or more of the phenoxide groups is ring-substituted with alkyl, CF₃, cyano, COCH₃, halogen, hydroxyl, alkoxyl and the like; zirconium carboxylates such as zirconium formate, zirconium acetate, zirconium propionate, zirconium 2-ethylhexanoate, zirconium benzoate, zirconium benzoates in which one or more of the benzoate groups is ring-substituted with alkyl, CF₃, cyano, COCH₃, halogen, hydroxyl, alkoxyl and the like, zirconium salicylate, zirconium 3,5-di-t-butyl salicylate; zirconium amides such as zirconium tetra(dimethylamide), zirconium tetra(diethylamide, zirconium tetra(diphenylamide), zirconium tetra((bistrimethylsilyl)amide); zirconium acetylacetonate and zirconium t-butylacetylacetonate;
f) vanadium alkoxides such as vanadium methoxide, vanadium ethoxide, vanadium isopropoxide, vanadium t-butoxide, vanadium sec-butoxide and the like; vanadium oxide; vanadium oxo tris(alkoxides) such as vanadium oxo tris(methoxide), vanadium oxo tris(ethoxide), vanadium oxo tris(isopropoxide), vanadium oxo tris(t-butoxide), vanadium oxo tris(sec-butoxide) and the like; vanadium aryloxides such as vanadium phenoxide and vanadium phenoxides in which one or more of the phenoxide groups is ring-substituted with alkyl, CF₃, cyano, COCH₃, halogen, hydroxyl, alkoxyl and the like; vanadium carboxylates such as vanadium formate, vanadium acetate, vanadium propionate, vanadium 2-ethylhexanoate, vanadium benzoate, vanadium benzoates in which one or more of the benzoate groups is ring-substituted with alkyl, CF₃, cyano, COCH₃, halogen, hydroxyl, alkoxyl and the like, vanadium salicylate, vanadium 3,5-di-t-butyl salicylate; vanadium tris(acetylacetonate) and vanadium tris(t-butylacetylacetonate); vanadium oxo bis(acetylacetonate);
g) zinc alkyls such as such as dimethyl zinc, diethyl zinc, dibutyl zinc, dibenzyl zinc and the like; zinc oxide; alkyl zinc alkoxides such as ethyl zinc isopropoxide; zinc alkoxides such as zinc methoxide, zinc ethoxide, zinc isopropoxide, zinc t-butoxide, zinc sec-butoxide and the like; zinc aryloxides such as zinc phenoxide and zinc phenoxides in which one or more of the phenoxide groups is ring-substituted with alkyl, CF₃, cyano, COCH₃, halogen, hydroxyl, alkoxyl and the like; zinc carboxylates such as zinc formate, zinc acetate, zinc propionate, zinc 2-ethylhexanoate, zinc benzoate, zinc benzoates in which one or more of the benzoate groups is ring-substituted with alkyl, CF₃, cyano, COCH₃, halogen, hydroxyl, alkoxyl and the like, zinc salicylate, zinc 3,5-di-t-butyl salicylate; zinc amides such as zinc dimethylamide, zinc diethylamide, zinc diphenylamide, zinc (bistrimethylsilyl)amide; zinc acetylacetonate and zinc t-butylacetylacetonate;
h) trialkyl aluminum compounds such as trimethylaluminum, triethyl aluminum, tributyl aluminum, tribenzylaluminum and the like; aluminum alkoxides such as aluminum trimethoxide, aluminum triethoxide, aluminum triisopropoxide, aluminum tri-t-butoxide, aluminum tri-sec-butoxide and the like; aluminum aryloxides such as aluminum phenoxide and aluminum phenoxides in which one or more of the phenoxide groups is ring-substituted with alkyl, CF₃, cyano, COCH₃, halogen, hydroxyl, alkoxyl and the like; aluminum oxide; aluminum carboxylates such as aluminum formate, aluminum acetate, aluminum propionate, aluminum 2-ethylhexanoate, aluminum benzoate, aluminum benzoates in which one or more of the benzoate groups is ring-substituted with alkyl, CF₃, cyano, COCH₃, halogen, hydroxyl, alkoxyl and the like, aluminum salicylate, aluminum 3,5-di-t-butyl salicylate; aluminum amides such as aluminum tris(dimethylamide), aluminum tris(diethylamide), aluminum tris(diphenylamide), aluminum tris(di(trimethylsilyl)amide) and the like; aluminum acetylacetonate; aluminum t-butylacetylacetonate; and alkylaluminum oxides and alkoxides such as diethylaluminum ethoxide, dimethylaluminum ethoxide, diethylaluminum isopropoxide, dimethylaluminum isopropoxide, methyl aluminoxane, tetraethyldialuminoxane and the like;
i) trialkyl gallium compounds such as trimethylgallium, triethyl gallium, tributyl gallium, tribenzylgallium and the like; gallium oxide; gallium alkoxides such as gallium trimethoxide, gallium triethoxide, gallium triisopropoxide, gallium tri-t-butoxide, gallium tri-sec-butoxide and the like; gallium aryloxides such as gallium phenoxide and gallium phenoxides in which one or more of the phenoxide groups is ring-substituted with alkyl, CF₃, cyano, COCH₃, halogen, hydroxyl, alkoxyl and the like; gallium carboxylates such as gallium formate, gallium acetate, gallium propionate, gallium 2-ethylhexanoate, gallium benzoate, gallium benzoates in which one or more of the benzoate groups is ring-substituted with alkyl, CF₃, cyano, COCH₃, halogen, hydroxyl, alkoxyl and the like, gallium salicylate, gallium 3,5-di-t-butyl salicylate; gallium amides such as gallium tris(dimethylamide), gallium tris(diethylamide), gallium tris(diphenylamide), gallium tris(di(trimethylsilyl)amide) and the like; gallium acetylacetonate; gallium t-butylacetylacetonate; and alkylgallium alkoxides such as diethylgallium ethoxide, dimethylgallium ethoxide, diethylgallium isopropoxide and dimethylgallium isopropoxide;
j) trialkyl indium compounds like trimethyl indium; indium oxide; indium alkoxides such as indium methoxide, indium ethoxide, indium isopropoxide, indium t-butoxide, indium sec-butoxide and the like; indium aryloxides such as indium phenoxide and indium phenoxides in which one or more of the phenoxide groups is ring-substituted with alkyl, CF₃, cyano, COCH₃, halogen, hydroxyl, alkoxyl and the like; indium carboxylates such as indium formate, indium acetate, indium propionate, indium 2-ethylhexanoate, indium benzoate, indium benzoates in which one or more of the benzoate groups is ring-substituted with alkyl, CF₃, cyano, COCH₃, halogen, hydroxyl, alkoxyl and the like, indium salicylate, indium 3,5-di-t-butyl salicylate; indium acetylacetonate; and indium t-butylacetylacetonate;
k) stannous phosphate; stannous pyrophosphate, stannous oxide; stannic oxide; stannous alkoxides such as stannous methoxide, stannous ethoxide, stannous isopropoxide, stannous t-butoxide, stannous sec-butoxide and the like; stannous aryloxides such as stannous phenoxide and stannous phenoxides in which one or more of the phenoxide groups is ring-substituted with alkyl, CF₃, cyano, COCH₃, halogen, hydroxyl, alkoxyl and the like; stannous carboxylates such as stannous formate, stannous acetate, stannous propionate, stannous 2-ethylhexanoate, stannous benzoate, stannous benzoates in which one or more of the benzoate groups is ring-substituted with alkyl, CF₃, cyano, COCH₃, halogen, hydroxyl, alkoxyl and the like, stannous salicylate, stannous 3,5-di-t-butyl salicylate; stannous acetylacetonate; and stannous t-butylacetylacetonate;
l) manganese phosphate; pyrophosphate, manganese oxide; manganese alkoxides such as manganese methoxide, manganese ethoxide, manganese isopropoxide, manganese t-butoxide, manganese sec-butoxide and the like; manganese aryloxides such as manganese phenoxide and manganese phenoxides in which one or more of the phenoxide groups is ring-substituted with alkyl, CF₃, cyano, COCH₃, halogen, hydroxyl, alkoxyl and the like; manganese carboxylates such as manganese formate, manganese acetate, manganese propionate, manganese 2-ethylhexanoate, manganese benzoate, manganese benzoates in which one or more of the benzoate groups is ring-substituted with alkyl, CF₃, cyano, COCH₃, halogen, hydroxyl, alkoxyl and the like, manganese salicylate, manganese 3,5-di-t-butyl salicylate; manganese acetylacetonate; and manganese t-butylacetylacetonate;
m) molybdenum compounds, including Mo(IV) and/or Mo(VI) compounds such as molybdenum phosphate; molybdenum pyrophosphate, molybdenum oxide; molybdenum alkoxides such as molybdenum methoxide, molybdenum ethoxide, molybdenum isopropoxide, molybdenum t-butoxide, molybdenum sec-butoxide and the like; molybdenum aryloxides such as molybdenum phenoxide and molybdenum phenoxides in which one or more of the phenoxide groups is ring-substituted with alkyl, CF₃, cyano, COCH₃, halogen, hydroxyl, alkoxyl and the like; molybdenum carboxylates such as molybdenum formate, molybdenum acetate, molybdenum propionate, molybdenum 2-ethylhexanoate, molybdenum benzoate, molybdenum benzoates in which one or more of the benzoate groups is ring-substituted with alkyl, CF₃, cyano, COCH₃, halogen, hydroxyl, alkoxyl and the like, molybdenum salicylate, molybdenum 3,5-di-t-butyl salicylate; molybdenum acetylacetonate; and molybdenum t-butylacetylacetonate; in each case being an Mo(IV) or (MoVI) compound;
m) cobalt (II) and/or Co(III) compounds such as cobalt phosphate; cobalt pyrophosphate, cobalt oxide; cobalt alkoxides such as cobalt methoxide, cobalt ethoxide, cobalt isopropoxide, cobalt t-butoxide, cobalt sec-butoxide and the like; cobalt aryloxides such as cobalt phenoxide and cobalt phenoxides in which one or more of the phenoxide groups is ring-substituted with alkyl, CF₃, cyano, COCH₃, halogen, hydroxyl, alkoxyl and the like; cobalt carboxylates such as cobalt formate, cobalt acetate, cobalt propionate, cobalt 2-ethylhexanoate, cobalt benzoate, cobalt benzoates in which one or more of the benzoate groups is ring-substituted with alkyl, CF₃, cyano, COCH₃, halogen, hydroxyl, alkoxyl and the like, cobalt salicylate, cobalt 3,5-di-t-butyl salicylate; cobalt acetylacetonate; and cobalt t-butylacetylacetonate, in each case being a Co(II) and/or Co(III) compound;
o) tungsten compounds such as tungsten phosphate; tungsten pyrophosphate, tungsten oxide; tungsten alkoxides such as tungsten methoxide, tungsten ethoxide, tungsten isopropoxide, tungsten t-butoxide, tungsten sec-butoxide and the like; tungsten aryloxides such as tungsten phenoxide and tungsten phenoxides in which one or more of the phenoxide groups is ring-substituted with alkyl, CF₃, cyano, COCH₃, halogen, hydroxyl, alkoxyl and the like; tungsten carboxylates such as tungsten formate, tungsten acetate, tungsten propionate, tungsten 2-ethylhexanoate, tungsten benzoate, tungsten benzoates in which one or more of the benzoate groups is ring-substituted with alkyl, CF₃, cyano, COCH₃, halogen, hydroxyl, alkoxyl and the like, tungsten salicylate, tungsten 3,5-di-t-butyl salicylate; tungsten acetylacetonate; and tungsten t-butylacetylacetonate;
p) iron (II) and/or iron (III) compounds such as iron phosphate; iron pyrophosphate, iron oxide; iron alkoxides such as iron methoxide, iron ethoxide, iron isopropoxide, iron t-butoxide, iron sec-butoxide and the like; iron aryloxides such as iron phenoxide and iron phenoxides in which one or more of the phenoxide groups is ring-substituted with alkyl, CF₃, cyano, COCH₃, halogen, hydroxyl, alkoxyl and the like; iron carboxylates such as iron formate, iron acetate, iron propionate, iron 2-ethylhexanoate, iron benzoate, iron benzoates in which one or more of the benzoate groups is ring-substituted with alkyl, CF₃, cyano, COCH₃, halogen, hydroxyl, alkoxyl and the like, iron salicylate, iron 3,5-di-t-butyl salicylate; iron acetylacetonate; and iron t-butylacetylacetonate, in each case being a Fe(II) and/or Fe(III) compound;
q) titanium compounds such as titanium phosphate; titanium pyrophosphate, titanium oxide; titanium alkoxides such as titanium methoxide, titanium ethoxide, titanium isopropoxide, titanium t-butoxide, titanium sec-butoxide and the like; titanium aryloxides such as titanium phenoxide and titanium phenoxides in which one or more of the phenoxide groups is ring-substituted with alkyl, CF₃, cyano, COCH₃, halogen, hydroxyl, alkoxyl and the like; titanium carboxylates such as titanium formate, titanium acetate, titanium propionate, titanium 2-ethylhexanoate, titanium benzoate, titanium benzoates in which one or more of the benzoate groups is ring-substituted with alkyl, CF₃, cyano, COCH₃, halogen, hydroxyl, alkoxyl and the like, titanium salicylate, titanium 3,5-di-t-butyl salicylate; titanium acetylacetonate; and titanium t-butylacetylacetonate; and
r) silicon compounds such as silicon oxide and silicon alkoxides such as silicon methoxide, silicon tetra ethoxide, silicon tetra isopropoxide, silicon tetra-t-butoxide, silicon tetra sec-butoxide and the like; silicon aryloxides such as silicon tetra phenoxide and silicon tetra phenoxides in which one or more of the phenoxide groups is ring-substituted with alkyl, CF₃, cyano, COCH₃, halogen, hydroxyl, alkoxyl and the like.

The catalyst complex (including those prepared in the process described above) in some embodiments of the invention corresponds to the formula:

M¹_{b}[M²(CN)ᵣ(X¹)ₜ]_{c}[M³(X²)₆]_{d} • nM⁴ₓA¹_{y} • pM⁵_{w}A²_{z}

wherein the variables are as described before. M¹ and M⁴ each most preferably are zinc. M² and M³ each most preferably are iron and cobalt, especially cobalt. M⁵ and A² preferably are as described above with regard to the M⁵ metal or semi-metal compound. r is most preferably 6 and t is most preferably zero. d is most preferably 0-1. The mole ratio of M¹ and M⁴ metals combined to M² and M³ metals combined is preferably 0.8:1 to 20:1. The mole ratio of M⁵ metal or semi-metal to M² and M³ metals combined may be, for example, 0.002 to 50 or 0.0025 to 10 as determined by X-ray fluorescence (XRF) methods. It is noted that the ratios of metals in the catalyst complex may differ substantially from the ratios employed in the catalyst preparation process.

The formula in the foregoing process is not intended to denote any special crystalline form or other spatial or chemical relationship between the M¹_{b}[M²(CN)ᵣ(X¹)ₜ]_{c}[M³(X²)₆]_{d}, M⁴ₓA¹_{y} and M⁵, A²_{z} components of the catalyst complex. Scanning transmission electron spectroscopy of certain catalyst complexes has revealed that at least some of in such embodiments the catalyst complex comprises hybrid particles having both an M¹_{b}[M²(CN)ᵣ(X¹)ₜ]_{c} phase and an M⁵ metal or semi-metal oxide (*i.e*., M⁵_{w}O_{z} phase). The M⁴ₓA¹_{y} phase, when present, is believed to reside at least partially on particles of the M¹_{b}[M²(CN)ᵣ(X¹)ₜ]_{c} phase. In addition to such hybrid particles, the catalyst complex may contain particles of the M¹_{b}[M²(CN)ᵣ(X¹)ₜ]_{c} phase or of a M¹_{b}[M²(CN)ᵣ(X¹)ₜ]_{c}[M³(X²)₆]_{d} • nM⁴ₓA¹_{y} phase only. Some of the M⁵ metal or semi-metal may become incorporated into the M¹_{b}[M²(CN)ᵣ(X¹)ₜ]_{c} phase or into a M¹_{b}[M²(CN)ᵣ(X¹)ₜ]_{c}[M³(X²)₆]_{d} • nM⁴ₓA¹_{y} phase.

The additive is selected from the group consisting of alkali metal, ammonium and quaternary ammonium salts of monocarboxylic acids having up to 24 carbon atoms; monobasic potassium phosphate, monobasic ammonium phosphate, monobasic quaternary ammonium phosphates, dibasic ammonium and quaternary ammonium phosphates and phosphoric acid.

The additive in some embodiments is or includes an alkali metal, ammonium and quaternary ammonium salt of a monocarboxylic acid having up to 24 carbon atoms. The monocarboxylic acid may have 1 to 18 carbon atoms, 1 to 12 carbon atoms, 1 to 8 carbon atoms or 1 to 2 carbon atoms. The monocarboxylic acid may be aliphatic and may be linear; in other embodiments the monocarboxylic acid may be aromatic (such as benzoic acid). The alkali metal may be lithium, sodium, potassium and/or cesium. By "ammonium", it is meant NH₄⁺ ion. A quaternary ammonium ion takes the form NR⁴⁺, wherein each R is independently H or hydrocarbyl, provided at least one R is hydrocarbyl. Specific examples include lithium, sodium, potassium, cesium or ammonium formate; lithium, sodium, potassium, cesium or ammonium acetate; lithium, sodium, potassium, cesium or ammonium benzoate, and lithium, sodium, potassium, cesium or ammonium salts of a linear or branched aliphatic C4-C18 monocarboxylic acid.

The additive may be or include one or more of a monobasic potassium phosphate, monobasic ammonium phosphate and a monobasic quaternary ammonium phosphate.

The additive may be or include dibasic ammonium phosphate ((NH₄⁺)₂HPO₄) and quaternary ammonium phosphates having the structure (NR₄⁺)₂HPO₄ where R is as defined before.

The weight of additive, except in the case of phosphoric acid, in some embodiments is from 1 to 25 times that of the catalyst complex. The additive weight may be, for example, at least 2 times or at least 3 times the weight of the catalyst complex. The additive weight may be up to 15 times, up to 10 times, up to 7.5 times or up to 5 times the weight of the catalyst complex.

The additive, except in the case of phosphoric acid, is conveniently present in the polymerization mixture in an amount of about 50 to 50,000 parts per million by weight (ppm), based on the weight of the product. A preferred lower amount is at least 100 ppm, at least 250 ppm, at least 500 ppm or at least 1000 ppm. A preferred upper amount is up to 10,000 ppm, up to 5,000 ppm, up to 2500 ppm or up to 1500 ppm.

Phosphoric acid, when present, conveniently is present in an amount from 0.01 to 1000 ppm, on the foregoing basis. A preferred lower amount is at least 0.5 ppm, or at least 1 ppm. A preferred upper amount is up to 100 ppm, up to 50 ppm or up to 25 ppm. Increasing the concentration of phosphoric acid above about 25 ppm may lead to diminished performance. Phosphoric acid, if used, may be present in an amount of 0.001 to 0.2 times the weight of the catalyst complex.

Polyethers made in accordance with the invention may include monoalcohols such as are useful for surfactant and industrial solvent or lubricant applications, and polyols such as are useful raw materials for producing polymers such as polyurethanes such as molded foams, slabstock foams, high resiliency foams, viscoelastic foams, rigid foams, adhesives, sealants, coatings, elastomers, composites, etc.

The following examples are provided to illustrate exemplary embodiments and are not intended to limit the scope thereof. All parts and percentages are by weight unless otherwise indicated.

### Catalyst Preparation Procedure:

A mixture of zinc chloride (32.00 g, 234.8 mmol), tert-butyl alcohol (40 mL), and deionized water (40 mL) is heated to 40°C in a round-bottomed flask. Subsequently, aluminum tri-sec-butoxide (1.66 g, 6.72 mmol) and aqueous HCl (86 µL, 0.001 M) are added, and the mixture stirred for 10 minutes. A solution of potassium hexacyanocobaltate (6.91, 20.8 mmol) in water (80 mL) is added dropwise over 2.5 hours. The mixture is then further diluted with 40 mL of 50/50 v/v deionized water / tert-butyl alcohol and heated under reflux for about 20 hours, until a white gel forms. The gel is dispersed in water (80 mL) and tert-butyl alcohol (80 mL) and is then centrifuged (5000 rpm) for 15 minutes. The solvent is decanted, and the gel is redispersed in a mixture of water (80 mL) and tert-butyl alcohol (80 mL). The dispersion is heated to 55°C for 35 minutes and then centrifuged again. The gel is washed by following the same procedure four times and then washed once more with 200 mL tert-butyl alcohol. The gel then is dried under vacuum at 60°C overnight in a vacuum oven. The dried solid so obtained is transferred to a nitrogen filled glovebox and ground to produce the catalyst as a white powder (8.32 g). The powdered catalyst has a particle size distribution d₅₀ < 20 µm. The catalyst contains 50.2 wt.-% zinc, 22.2 wt-% cobalt and 1.7 wt.-% aluminum.

### Examples 1-9 and Comparative Samples A-G

Ethylene oxide polymerizations are performed using a 48-well Symyx Technologies Parallel Pressure Reactor (PPR). Each of the wells is equipped with an individually weighed glass insert having an internal working liquid volume of approximately 5 mL. 3 mL of a mixture of 98.5% of a 625 weight average molecular weight poly(ethylene oxide) triol and 1.5 % glycerin is added to each well, together with 265 parts by weight of the catalyst (based on the expected mass of the product) and an additive as indicated in Table 1. This mixture contains about 9 wt. % hydroxyl groups. The wells are pressurized with 70 psig (483 kPa) dry nitrogen at 160°C. 0.3 mL of ethylene oxide is injected into each well, raising the internal pressure in each well to 140 - 160 psig (966-1103 kPa). At this point, the reaction mixture contains about 8 wt. % hydroxyl groups and about 8 wt. % ethylene oxide. The internal pressure is monitored over time as an indication of the progress of the ethylene oxide polymerization reaction. The ethylene oxide concentration declines as the polymerization proceeds in cases in which a decline in internal reactor pressure is seen. The times required for the pressure to decline to 90 psig (621 kPa) and then to 80 psig (552 kPa) are recorded. Shorter times are indicative of greater catalytic activity. Results are as indicated in Table 1.

**Table 1**

| **Designation** | **Additive** | **Additive Concentration, ppm)** | **Time to 90 psig (621 kPa), min.** | **Time to 80 psig (552 kPa), min.** |
|---|---|---|---|---|
| A* | None | 265/0 | >180 | >180 |
| 1 | Sodium Acetate | 1335 | 4.7 | 7.4 |
| 2 | Potassium Acetate | 1335 | 5.4 | 8.4 |
| 3 | Cesium Acetate | 1335 | 4.3 | 7.8 |
| 4 | Sodium Formate | 1335 | 8.7 | 13.4 |
| 5 | Potassium Benzoate | 1335 | 6.7 | 11.8 |
| 6 | Sodium Laurate | 1335 | 11.6 | 21.2 |
| 7 | Monobasic Potassium Phosphate | 1335 | 6.2 | 43.7 |
| 8 | Ammonium Dihydrogen Phosphate | 1335 | 8.5 | >180 |
| 9 | Sodium Stearate | 1335 | 19.75 | 35.0 |
| B* | Calcium Formate | 1335 | 109.2 | >180 |
| C* | Sodium Triflate | 1335 | 36.2 | 56.2 |
| D* | Dibasic Potassium Phosphate | 1335 | 50.2 | >180 |
| E* | Sodium Hydrogen Carbonate | 1335 | 107 | 175 |
| F* | Sodium Carbonate | 1335 | 91.9 | 157.6 |
| G* | Lithium Dihydrogen Phosphate | 1335 | >180 | >180 |

| | | | | |
|---|---|---|---|---|
| *Not an example of the invention. | | | | |

Comparative Sample A represents a baseline case. The catalyst complex by itself is unable to initiate polymerization under these very stringent conditions (high concentration of hydroxyl groups plus the selection of ethylene oxide). Examples 1-9 show that active polymerization takes place when alkali metal carboxylates (Ex. 1-6 and 9), monobasic potassium phosphate or ammonium dihydrogen phosphate are additionally present in the reaction mixture. The time for the reactor pressure to decline to 90 psig (621 kPa) is reduced by a factor of 9 or greater.

Comparative Samples B-G show the poorer effect of various other additives. An alkaline earth carboxylate salt (calcium formate, Comp. Sample B) reduces the time to 90 psig (621 kPa) almost by half but does not reduce the time to 80 psig (552 kPa). The same is true of dibasic potassium phosphate (Comp. D) and the carbonate salts (Comp. E and F). The triflate salt (Comp. C) provides some benefit, but is much less effective than the additives of the invention. Lithium dihydrogen phosphate (Comp. G) provides no benefit at all.

### Examples 10-16 and Comparative Samples H-K

397.2 grams of a solution of 0.7 wt.-% glycerol in a 625 weight average molecular weight poly(ethylene oxide) triol, and enough catalyst to provide 250 parts per million based on the expected mass of the product are added to a 500 mL Parker/AutoClave reactor at room temperature. The reactor is sparged with dry nitrogen overnight, then heated to 130°C with continual sparging for 1.5 hours. The reactor is then heated to 160°C while sparging with nitrogen, then pressurized to 7.5 psig (51.7 kPa) with dry nitrogen. The reaction mixture at this point contains 8-9 wt.% hydroxyl groups. 16.2 g of ethylene oxide is then added to the reactor at the same temperature, at a rate of 2 g/minute. This raises the pressure in the reactor to about 35 psig (241.3 kPa). At the end of the ethylene oxide addition (assuming no polymerization), the reaction mixture contains about 4 wt. % ethylene oxide and about 8 wt. % hydroxyl groups. The pressure inside the reactor is monitored until the pressure drops to 10 psig (68.9 kPa). Note that the reaction conditions at this point are less severe than those in the previous examples, due to the lower glycerin concentration and lower ethylene oxide concentration. The reactor is then depressurized and cooled to about 60°C under a continuous dry nitrogen sparge. Then, an additional 2.8 g of glycerin and an additive as indicated in Table 2 is added. The reactor is then taken back through the same continual sparging and temperature ramp procedure. Upon reaching a temperature of 160°C, an additional 16.2 g of ethylene oxide is added to the reactor. The decline of the pressure in the reactor is continually monitored until a constant pressure is achieved, indicating consumption of all the ethylene oxide. The time at which constant reactor pressure is achieved is recorded as in indication of catalytic performance. The reactor is then sparged with dry nitrogen for 10 minutes, allowed to cool to about 60°C, and the product is collected. Final batch size is approximately 430 grams in each case.

**Table 2**

| **Example** | **Additive** | **Concentration (ppm in the final product)** | **Time to complete EO consumption (min)** |
|---|---|---|---|
| H* | None | 0 | >180 |
| Ex. 10 | Potassium Acetate | 100 | 83 |
| Ex. 11 | Potassium Acetate | 500 | 26 |
| Ex. 12 | Potassium Acetate | 1000 | 13 |
| Ex. 13 | Phosphoric Acid | 0.12 | 111 |
| Ex. 14 | Phosphoric Acid | 1.25 | 73 |
| Ex. 15 | Phosphoric Acid | 12.5 | 108 |
| Ex. 16 | Phosphoric Acid | 125 | 162 |
| I* | Acetic Acid | 1 | >180 |
| J* | Acetic Acid | 100 | >180 |
| K* | Acetic Acid | 1000 | >180 |

| | | | |
|---|---|---|---|
| *Not an example of the invention. | | | |

Theses examples demonstrate the effect of additives of the invention on polymerization rates obtained with a previously activated double metal cyanide catalyst complex that is modified with aluminum. The presence of potassium acetate reduces the polymerization time by a factor of about 2 (at the 100 ppm level) to about 14 (at the 100 ppm level. Phosphoric acid is effective at very low levels, as shown especially by Examples 13-15. Less of a benefit is seen at a phosphoric acid concentration of 125 ppm than at 12.5 ppm and at 1.25 ppm, Acetic acid provides no benefit across the broad range of concentrations evaluated.

### Examples 17-20 and Comparative Samples L and M

12.2 g of monopropylene glycol containing phosphoric acid (in amounts as indicated in Table 3 below) and 50 parts per million of the catalyst added to a 12 liter reactor together with 2440 g of a 400 weight average molecular weight poly(propylene oxide) diol. The reactor contents are heated to 160°C under nitrogen. 128 g of propylene oxide are fed to the reactor. The reactor is maintained at 160°C. Pressure is monitored until a rapid pressure drop and exotherm are seen, indicating the catalyst has become activated. The peak reactor pressure during this activation step is recorded.

Then, 4267 g of propylene oxide and 982 g of the catalyst- and phosphoric acid-containing monopropylene glycol are fed simultaneously to the reactor while maintaining a constant reactor temperature. The propylene oxide and monopropylene glycol feeds are ramped up over a time period as indicated in Table 3 until final feed rates as indicated in Table 3 are achieved. Pressure is monitored as before, with the peak pressure during this polymerization step being recorded. At the conclusion of these feeds, the monopropylene glycol feed is discontinued and another 160 g propylene oxide is fed to the reactor, at the same final feed rate.

**Table 3**

| Designation | Ex. 17 | Ex. 18 | Ex. 19 | L* | Ex. 20 | M* |
|---|---|---|---|---|---|---|
| H₃PO₄ concentration¹, ppm | 75 | 75 | 75 | 0 | 75 | 0 |
| PO feed rate, g/min | 14.8 | 14.8 | 14.8 | 14.8 | 7.5 | 7.5 |
| MPG feed rate, g/min | 3.41 | 3.41 | 3.41 | 3.41 | 1.73 | 1.73 |
| Ramp time, hr | 2.5 | 2.5 | 2.5 | 2.5 | 1 | 1 |
| Maximum Pressure during activation step, atm (gauge) | 0.81 | 0.69 | 0.79 | 1.01 | 0.82 | 1.06 |
| Maximum pressure during feed step, atm (gauge) | 0.39 | 0.38 | 0.37 | 3.08 | 0.51 | 3.61 |
| Product M_{w} | 348 | 348 | 351 | 318 | 339 | 339 |
| PDI | 1.346 | 1.352 | 1.346 | 1.386 | 1.356 | 1.339 |

| | | | | | | |
|---|---|---|---|---|---|---|
| ¹By weight in the monopropylene glycol. PO is propylene oxide. MPG is monopropylene glycol. | | | | | | |

## Claims

1. A method for producing a polyether, the method forming a reaction mixture comprising a hydroxyl-containing starter, at least one alkylene oxide, a catalyst complex, and an additive, and polymerizing the alkylene oxide onto the hydroxyl-containing starter to produce the polyether, wherein the catalyst complex is selected from the group consisting of catalyst complexes I and II, wherein
catalyst complex I is a catalyst complex produced in a method comprising:
a) forming a starting solution comprising i) a solvent that includes at least one of water and a liquid aliphatic alcohol, the solvent having dissolved therein ii) a cyanometallate compound having an M² metal cyanometallate group and iii) a M¹ metal compound which reacts with the cyanometallate compound to form a water-insoluble M¹ metal cyanometallate, which starting solution further contains 0.01 to 10 moles, per mole of cyanometallate compound, of iii) at least one M⁵ metal or semi-metal compound different from the M¹ metal salt, the M⁵ metal or semi-metal compound being a compound of a M⁵ metal or semi-metal and an anion, the M⁵ metal or semi-metal being selected from one or more of magnesium, a Group 3 - Group 15 metal or semi-metal, or a lanthanide series metal which the M⁵ metal or semi-metal is bonded to at least one alkoxide, aryloxy, carboxylate, acyl, pyrophosphate, phosphate, thiophosphate, dithiophosphate, phosphate ester, thiophosphate ester, amide, oxide, siloxide, hydride, carbamate or hydrocarbon anion, and the M⁵ metal or semi-metal compound is devoid of halide anions; and
b) reacting the cyanometallate compound and M¹ metal compound to form a water-insoluble catalyst complex that includes a M¹ metal cyanometallate;
and catalyst complex II corresponds to the formula:
M¹_{b}[M²(CN)ᵣ(X¹)ₜ]_{c}[M³(X²)₆]_{d} • nM⁴ₓA¹_{y} • pM⁵_{w}A²_{z}
wherein:
M¹ and M⁴ each represent a metal ion independently selected from Zn²⁺, Fe²⁺, Co⁺²⁺, Ni²⁺, Mo⁴⁺, Mo⁶⁺, Al⁺³⁺, V⁴⁺, V⁵⁺, Sr²⁺, W⁴⁺, W⁶⁺, Mn²⁻, Sn²⁺, Sn⁴⁺, Pb²⁺, Cu²⁺, La³⁺, and Cr³⁺;
M² and M³ each represent a metal ion independently selected from Fe³⁺, Fe²⁺, Co³⁺, Co²⁺, Cr²⁺, Cr³⁺, Mn²⁺, Mn³⁺, Ir³⁺, Ni²⁺, Rh³⁺, Ru²⁺, V⁴⁺, V⁵⁺, Ni²⁺, Pd²⁺, and Pt²⁺;
M⁵ represents at least one magnesium, Group 3 - Group 15 metal, or lanthanide series metal or semi-metal ion;
X¹ represents a group other than cyanide that coordinates with the M² ion;
X² represents a group other than cyanide that coordinates with the M³ ion;
A¹ represents an anion selected from halide, nitrate, sulfate, carbonate, cyanide, oxalate, thiocyanate, isocyanate, perchlorate, isothiocyanate, an alkanesulfonate, an arylenesulfonate and trifluoromethanesulfonate;
A² represents least one alkoxide, aryloxy, carboxylate, acyl, pyrophosphate, phosphate, thiophosphate, amide, oxide, siloxide, hydride, carbamate, or hydrocarbon anion;
b, c and d are each numbers that the M¹_{b}[M²(CN)ᵣ(X¹)ₜ]_{c}[M³(X²)₆]_{d} group is electrostatically neutral, provided that b and c each are greater than zero;
x and y are integers such that the metal salt M⁴ₓA¹_{y} is electrostatically neutral;
r is an integer from 4 to 6;
t is an integer from 0 to 2;
n is a number from 0 and 20;
p is from 0.002 to 10; and
w and z are integers such that the metal salt M⁵_{z}A²_{z} is electrostatically neutral, provided that w is from 1 to 4;
and the additive is selected from the group consisting of alkali metal, ammonium and quaternary ammonium salts of monocarboxylic acids having up to 24 carbon atoms; monobasic potassium phosphate, monobasic ammonium and quaternary ammonium phosphates, dibasic ammonium and quaternary ammonium phosphates and phosphoric acid.

2. The process of claim 1 wherein the M⁵ metal or semi-metal is one or more of aluminum, hafnium, indium, manganese or gallium.

3. The process of claim 1 or 2 wherein the molar ratio of M5 metal or semi metal to M² and M³ metals combined is 0.0025 to 50.

4. The process of any preceding claim wherein M¹ is zinc and the cyanometallate compound is a hexacyanocobaltate compound.

5. The process of any preceding claim wherein the additive is selected from the group consisting of alkali metal, ammonium and quaternary ammonium salts of monocarboxylic acids having up to 24 carbon atoms; monobasic potassium phosphate, monobasic ammonium and quaternary ammonium phosphates and dibasic ammonium and quaternary ammonium phosphates, and the additive is present in an amount of 1 to 10 times that of the catalyst complex, by weight.

6. The process of any of claims 1-4 wherein the additive is phosphoric acid and the amount of phosphoric acid is 0.001 to 0.2 times the weight of the catalyst complex.

7. The process of any preceding claim wherein the alkylene oxide is ethylene oxide.

8. The process of any preceding claim which is semi-batch process in which the catalyst complex and starter are charged to a reaction vessel, the catalyst complex is activated and at least a portion of the alkylene oxide is thereafter added to the reaction vessel containing the activated catalyst complex and starter under polymerization conditions without removal of product until all of the alkylene oxide has been added, or a continuous process in which the catalyst complex, starter and alkylene oxide are fed continuous to a reaction vessel under polymerization conditions and product is continuously removed from the reaction vessel.

9. The process of any preceding claim wherein the reaction mixture has a hydroxyl content of 4.25 to 20 wt. %, especially 4.25 to 15 wt. %, based on the total weight of the reaction mixture, during at least a portion of step II.

10. The process of any preceding claim wherein the the hydroxyl-containing starter has an equivalent weight of up to 75.

## Patentansprüche

1. Verfahren zum Herstellen eines Polyethers, wobei das Verfahren ein Reaktionsgemisch bildet, umfassend einen hydroxylhaltigen Initiator, mindestens ein Alkylenoxid, einen Katalysatorkomplex und ein Additiv, und das Alkylenoxid auf den hydroxylhaltigen Initiator polymerisiert, um den Polyether herzustellen, wobei der Katalysatorkomplex ausgewählt ist aus der Gruppe, bestehend aus Katalysatorkomplexen I und II, wobei
der Katalysatorkomplex I ein Katalysatorkomplex ist, der in einem Verfahren hergestellt wird, umfassend:
a) Bilden einer Initiatorlösung, umfassend i) ein Lösungsmittel, das mindestens eines von Wasser und einem flüssigen aliphatischen Alkohol einschließt, wobei das Lösungsmittel darin gelöst ist, ii) eine Cyanometallatverbindung mit einer M²-Metallcyanometallatgruppe und iii) eine M¹-Metallverbindung, die mit der Cyanometallatverbindung reagiert, um ein wasserunlösliches M¹-Metallcyanometallat zu bilden, wobei die Initiatorlösung ferner 0,01 bis 10 Mol pro Mol Cyanometallatverbindung von iii) mindestens einer M⁵-Metall- oder Halbmetallverbindung enthält, die sich von dem M¹-Metallsalz unterscheidet, wobei die M⁵-Metall- oder Halbmetallverbindung eine Verbindung eines M⁵-Metalls oder Halbmetalls und eines Anions ist, wobei das M⁵-Metall oder Halbmetall ausgewählt ist aus einem oder mehreren von Magnesium, einem Metall oder Halbmetall der Gruppe 3 bis Gruppe 15 oder einem Metall der Lanthanoidenreihe, dessen M⁵-Metall oder Halbmetall an mindestens ein Alkoxid, Aryloxy, Carboxylat, Acyl, Pyrophosphat, Phosphat, Thiophosphat, Dithiophosphat, Phosphatester, Thiophosphatester, Amid, Oxid, Siloxid, Hydrid, Carbamat oder Kohlenwasserstoffanion gebunden ist, und die M⁵-Metall- oder Halbmetallverbindung frei von Halogenidanionen ist; und
b) Umsetzen der Cyanometallatverbindung und der M¹-Metallverbindung, um einen wasserunlöslichen Katalysatorkomplex zu bilden, der ein M¹-Metallcyanometallat einschließt;
und der Katalysatorkomplex II der folgenden Formel entspricht:
M¹_{b}[M²(CN)ᵣ(X¹)ₜ]_{c}[M³(X²)ₑ]_{d} • nM⁴ₓA¹_{y} • pM⁵_{w}A²_{z}
worin:
M¹ und M⁴ jeweils ein Metallion darstellen, unabhängig ausgewählt aus Zn²⁺, Fe²⁺ , Co⁺²⁺, Ni²⁺ , Mo⁴⁺, Mo⁶⁺, Al⁺³⁺, V⁴⁺, V⁵⁺, Sr²⁺, W⁴⁺, W⁶⁺, Mn²⁺, Sn²⁺, Sn⁴⁺, Pb²⁺, Cu²⁺, La³⁺ und Cr³⁺;
M² und M³ jeweils ein Metallion darstellen, unabhängig ausgewählt aus Fe³⁺, Fe²⁺, Co³⁺, Co²⁺, Cr²⁺, Cr³⁺, Mn²⁺, Mn³⁺, Ir³⁺, Ni²⁺, Rh³⁺, Ru²⁺, V⁴⁺, V⁵⁺, Ni²⁺, Pd²⁺ und Pt²⁺;
M⁵ mindestens ein Magnesium, Metall der Gruppe 3 bis Gruppe 15 oder Metall oder Halbmetallion der Lanthanoidenreihe darstellt;
X¹ eine andere Gruppe als Cyanid darstellt, die mit dem M²-Ion koordiniert;
X² eine andere Gruppe als Cyanid darstellt, die mit dem M³-Ion koordiniert;
A¹ ein Anion darstellt, ausgewählt aus Halogenid, Nitrat, Sulfat, Carbonat, Cyanid, Oxalat, Thiocyanat, Isocyanat, Perchlorat, Isothiocyanat, einem Alkansulfonat, einem Arylensulfonat und Trifluormethansulfonat;
A² mindestens ein Alkoxid, Aryloxy, Carboxylat, Acyl, Pyrophosphat, Phosphat, Thiophosphat, Amid, Oxid, Siloxid, Hydrid, Carbamat, Halogenid oder Kohlenwasserstoffanion darstellt;
b, c und d jeweils Zahlen sind, dass die M¹_{b}[M²(CN)ᵣ(X¹)ₜ]_{c}[M³(X²)ₑ]_{d}-Gruppe elektrostatisch neutral ist, mit der Maßgabe, dass b und c jeweils größer als Null sind;
x und y ganze Zahlen sind, so dass das Metallsalz M⁴ₓA¹_{y} elektrostatisch neutral ist;
r eine ganze Zahl von 4 bis 6 ist;
t eine ganze Zahl von 0 bis 2 ist;
n eine Zahl von 0 bis 20 ist;
p von 0,002 bis 10 ist; und
w und z ganze Zahlen sind, so dass das Metallsalz M⁵_{Z}A²_{Z} elektrostatisch neutral ist, mit der Maßgabe, dass w von 1 bis 4 ist;
und das Additiv ausgewählt ist aus der Gruppe, bestehend aus Alkalimetall-, Ammonium- und quaternären Ammoniumsalzen von Monocarbonsäuren mit bis zu 24 Kohlenstoffatomen; einbasischem Kaliumphosphat, einbasischem Ammonium und quaternären Ammoniumphosphaten, zweibasischem Ammoniumphosphat und quaternären Ammoniumphosphaten und Phosphorsäure.

2. Verfahren nach Anspruch 1, wobei das M⁵-Metall oder Halbmetall eines oder mehrere von Aluminium, Hafnium, Indium, Mangan oder Gallium ist.

3. Verfahren nach Anspruch 1 oder 2, wobei das Molverhältnis von M5-Metall oder Halbmetall zu M²- und M³-Metallen kombiniert 0,0025 bis 50 beträgt.

4. Verfahren nach einem der vorstehenden Ansprüche, wobei M¹ Zink ist und die Cyanometallatverbindung eine Hexacyanocobaltatverbindung ist.

5. Verfahren nach einem der vorstehenden Ansprüche, wobei das Additiv ausgewählt ist aus der Gruppe, bestehend aus Alkalimetall-, Ammonium- und quaternären Ammoniumsalzen von Monocarbonsäuren mit bis zu 24 Kohlenstoffatomen; einbasischem Kaliumphosphat, einbasischem Ammoniumphosphat und quaternären Ammoniumphosphaten sowie zweibasischem Ammoniumphosphat und quaternären Ammoniumphosphaten, und das Additiv ist in einer Menge vorhanden, die der 1- bis 10-fachen des Katalysatorkomplexes, bezogen auf das Gewicht, entspricht.

6. Verfahren nach einem der Ansprüche 1 bis 4, wobei das Additiv Phosphorsäure ist und die Menge an Phosphorsäure das 0,001- bis 0,2-fache des Gewichts des Katalysatorkomplexes beträgt.

7. Verfahren nach einem der vorstehenden Ansprüche, wobei das Alkylenoxid Ethylenoxid ist.

8. Verfahren nach einem der vorstehenden Ansprüche, das ein Halbchargenverfahren ist, bei dem der Katalysatorkomplex und der Initiator in ein Reaktionsgefäß geladen werden, der Katalysatorkomplex aktiviert wird und danach zumindest ein Anteil des Alkylenoxids dem Reaktionsgefäß, das den aktivierten Katalysatorkomplex und den Initiator enthält, unter Polymerisationsbedingungen ohne Entfernung von Produkt zugegeben wird, bis das gesamte Alkylenoxid zugegeben wurde, oder ein kontinuierliches Verfahren ist, bei dem der Katalysatorkomplex, Initiator und Alkylenoxid kontinuierlich einem Reaktionsgefäß unter Polymerisationsbedingungen zugeführt werden und Produkt kontinuierlich aus dem Reaktionsgefäß entfernt wird.

9. Verfahren nach einem der vorstehenden Ansprüche, wobei das Reaktionsgemisch während zumindest eines Teils von Schritt II einen Hydroxylgehalt von 4,25 bis 20 Gew.-%, insbesondere 4,25 bis 15 Gew.-%, basierend auf dem Gesamtgewicht des Reaktionsgemisches, aufweist.

10. Verfahren nach einem der vorstehenden Ansprüche, wobei der hydroxylhaltige Initiator ein Äquivalentgewicht von bis zu 75 aufweist.

## Revendications

1. Procédé permettant de produire un polyéther, le procédé formant un mélange réactionnel comprenant une amorce contenant un hydroxyle, au moins un oxyde d'alkylène, un complexe de catalyseur, et un additif, et polymérisant l'oxyde d'alkylène sur l'amorce contenant un hydroxyle pour produire le polyéther, dans lequel le complexe de catalyseur est choisi dans le groupe constitué de complexe de catalyseur I et II, dans lequel
le complexe de catalyseur I est un complexe de catalyseur produit dans un procédé comprenant :
a) la formation d'une solution d'amorce comprenant i) un solvant qui comporte au moins l'un parmi de l'eau et un alcool aliphatique liquide, le solvant ayant, dissous à l'intérieur de celui-ci, ii) un composé cyanométallate ayant un groupe cyanométallate de métal M² et iii) un composé métal M¹ qui réagit avec le composé cyanométallate pour former un cyanométallate de métal M¹ insoluble dans l'eau, cette solution d'amorce contenant en outre 0,01 à 10 moles, par mole de composé cyanométallate, de iii) au moins un composé métal ou semi-métal M⁵ différent du sel de métal M¹, le composé métal ou semi-métal M⁵ étant un composé d'un métal ou semi-métal M⁵ et un anion, le métal ou semi-métal M⁵ étant choisi parmi un ou plusieurs parmi magnésium, un métal ou semi-métal du Groupe 3 - Groupe 15, ou un métal de la série des lanthanides ce métal ou semi-métal M⁵ étant lié à au moins un anion alcoolate, aryloxy, carboxylate, acyle, pyrophosphate, phosphate, thiophosphate, dithiophosphate, ester de phosphate, ester de thiophosphate, amide, oxyde, siloxyde, hydrure, carbamate ou hydrocarbure, et le composé métal ou semi-métal M⁵ est dépourvu d'anions halogénure ; et
b) la réaction du composé cyanométallate et du composé de métal M¹ pour former un complexe de catalyseur insoluble dans l'eau qui comporte un cyanométallate de métal M¹ ;
et le complexe de catalyseur II correspond à la formule :
M¹_{b}[M²(CN)ᵣ(X¹)ₜ]_{c}[M³(X²)₆]_{d} • nM⁴ₓA¹_{y} • pM⁵_{w}A²_{Z}
dans lequel :
M¹ et M⁴ représentent chacun un ion métal indépendamment choisi parmi Zn²⁺, Fe²⁺, Co⁺²⁺, Ni²⁺, Mo⁴⁺, Mo⁶⁺, Al⁺³⁺, V⁴⁺, V⁵⁺, Sr²⁺, W⁴⁺, W⁶⁺, Mn²⁺, Sn²⁺, Sn⁴⁺, Pb²⁺, Cu²⁺, La³⁺ et Cr³⁺;
M² et M³ représentent chacun un ion métal indépendamment choisi parmi Fe³⁺, Fe²⁺, Co³⁺, Co²⁺, Cr²⁺, Cr³⁺, Mn²⁺, Mn³⁺, Ir³⁺, Ni²⁺, Rh³⁺, Ru²⁺, V⁴⁺, V⁵⁺, Ni²⁺, Pd²⁺ et Pt²⁺;
M⁵ représente au moins un ion métal ou semi-métal de magnésium, de métal du Groupe 3 - Groupe 15, ou de la série des lanthanides ;
X¹ représente un groupe autre que cyanure qui se coordonne avec l'ion M² ;
X² représente un groupe autre que cyanure qui se coordonne avec l'ion M³ ;
A¹ représente un anion choisi parmi halogénure, nitrate, sulfate, carbonate, cyanure, oxalate, thiocyanate, isocyanate, perchlorate, isothiocyanate, un alcane-sulfonate, un arylènesulfonate et trifluorométhanesulfonate ;
A² représente au moins un anion alcoolate, aryloxy, carboxylate, acyle, pyrophosphate, phosphate, thiophosphate, amide, oxyde, siloxyde, hydrure, carbamate ou hydrocarbure ;
b, c et d sont chacun nombres tels que le groupe M¹_{b}[M²(CN)ᵣ(X¹)ₜ]_{c}[M³(X²)₆]_{d} est électrostatiquement neutre, à condition que b et c soient chacun supérieurs à zéro ;
x et y sont des nombres entiers tels que le sel de métal M⁴ₓA¹_{y} est électrostatiquement neutre ;
r est un nombre entier allant de 4 à 6 ;
t est un nombre entier allant de 0 à 2 ;
n est un nombre allant de 0 à 20 ;
p va de 0,002 à 10 ; et
w et z sont des nombres entiers tels que le sel de métal M⁵_{Z}A²_{Z} est électrostatiquement neutre, à condition que w aille de 1 à 4 ;
et l'additif est choisi dans le groupe constitué de sels de métal alcalin, d'ammonium et d'ammonium quaternaire d'acides monocarboxyliques ayant jusqu'à 24 atomes de carbone ; phosphate de potassium monobasique, phosphates d'ammonium et d'ammonium quaternaire monobasiques, phosphates d'ammonium et d'ammonium quaternaire dibasiques et acide phosphorique.

2. Processus selon la revendication 1 dans lequel le métal ou semi-métal M⁵ est un ou plusieurs parmi aluminium, hafnium, indium, manganèse ou gallium.

3. Processus selon la revendication 1 ou 2 dans lequel le rapport molaire du métal ou semi-métal M5 aux métaux M² et M³ combinés va de 0,0025 à 50.

4. Processus selon l'une quelconque des revendications précédentes, dans lequel M¹ est zinc et le composé cyanométallate est un composé hexacyanocobaltate.

5. Processus selon l'une quelconque des revendications précédentes, dans lequel l'additif est choisi dans le groupe constitué de sels de métal alcalin, d'ammonium et d'ammonium quaternaire d'acides monocarboxyliques ayant jusqu'à 24 atomes de carbone ; phosphate de potassium monobasique, phosphates d'ammonium et d'ammonium quaternaire monobasiques et phosphates d'ammonium et d'ammonium quaternaire dibasiques, et l'additif est présent en une quantité de 1 à 10 fois celle du complexe de catalyseur, en poids.

6. Processus selon l'une quelconque des revendications 1 à 4 dans lequel l'additif est de l'acide phosphorique et la quantité d'acide phosphorique vaut 0,001 à 0,2 fois le poids du complexe de catalyseur.

7. Processus selon l'une quelconque des revendications précédentes, dans lequel l'oxyde d'alkylène est de l'oxyde d'éthylène.

8. Processus selon l'une quelconque revendication précédente qui est un processus semi-continu dans lequel le complexe de catalyseur et l'amorce sont chargés dans un récipient à réaction, le complexe de catalyseur est activé et au moins une partie de l'oxyde d'alkylène est par la suite ajoutée au récipient à réaction contenant le complexe de catalyseur activé et l'amorce dans des conditions de polymérisation sans retrait de produit jusqu'à ce que la totalité de l'oxyde d'alkylène ait été ajoutée, ou un processus continu dans lequel le complexe de catalyseur, l'amorce et l'oxyde d'alkylène sont alimentés en continu à un récipient à réaction dans des conditions de polymérisation et un produit est retiré de façon continue du récipient à réaction.

9. Processus selon l'une quelconque des revendications précédentes, dans lequel le mélange réactionnel a une teneur en groupes hydroxyle de 4,25 à 20 % en poids, spécialement 4,25 à 15 % en poids, en fonction du poids total du mélange réactionnel, pendant au moins une partie de l'étape II.

10. Processus selon l'une quelconque des revendications précédentes, dans lequel l'amorce contenant un hydroxyle a un poids équivalent allant jusqu'à 75.
